# FASCICULE DE BREVET EUROPEEN

(11) **EP 4 308 455 B1**
(45) Date de publication et mention de la délivrance du brevet: **24.12.2025**
(21) Numéro de dépôt: 22707471.3
(22) Date de dépôt: 28.02.2022
(51) Int. Cl.: B64D 11/04, B64D 11/06, B64D 11/00

(54) **MEUBLE DE CABINE D'AVION INTÉGRANT DES ÉQUIPEMENTS POUR PERSONNEL DE BORD ET POUR UN PASSAGER**
FLUGZEUGKABINENMÖBEL MIT EINER EINRICHTUNG FÜR BESATZUNG UND FÜR EINEN PASSAGIER
AIRCRAFT CABIN FURNITURE INCORPORATING EQUIPMENT FOR CREW AND FOR A PASSENGER

(30) Priorité: 16.03.2021 EP 21162976; 07.07.2021 FR 2107328
(43) Date de publication de la demande: 24.01.2024
(73) Titulaire: Safran Seats, 78370 Plaisir (FR)
(72) Inventeur: LAYET, Julien, 77550 MOISSY-CRAMAYEL (FR)
(74) Mandataire: Marconnet, Sébastien
(86) Numéro de dépôt international: PCT/EP2022/055002
(87) Numéro de publication internationale: WO 2022/194525

(56) Documents cités:
- EP-A1- 3 871 975
- EP-A1- 3 915 878
- DE-A1- 102016 106 204
- US-A1- 2007 241 232
- US-A1- 2008 302 911
- US-A1- 2015 367 942
- US-A1- 2016 304 204
- US-A1- 2017 283 059
- US-A1- 2019 291 868
- US-A1- 2021 053 686
- US-A1- 2021 371 109
- US-A1- 2022 024 591
- US-B2- 7 918 504
- UNKOWN: "Front Row Monument", 23 February 2018 (2018-02-23), pages 1 - 2, XP055863886, Retrieved from the Internet <URL:https://www.diehl.com/cms/files/Front-Row-Monument_Online-2018.pdf> [retrieved on 20211122]

## Description

La présente invention porte sur un meuble de cabine d'avion intégrant des équipements pour personnel de bord et pour un passager. L'invention trouve une application particulièrement avantageuse, mais non exclusive, avec les avions commerciaux.

De façon connue en soi, un module de cuisine dit "galley" en anglais est un meuble d'intérieur d'avion contenant notamment des chariots, des rangements, et des équipements pour pouvoir cuisiner ou réchauffer des aliments, tels qu'un réfrigérateur, un four, une machine à café, une bouilloire, une source d'eau ou tout autre équipement pouvant être utilisé dans un avion pour préparer une boisson ou un plat.

Un module de cuisine peut contenir des chariots et/ou des demi-chariots ayant une capacité inférieure à celle d'un chariot. Un chariot ou un demi-chariot est configuré pour stocker des plateaux repas et/ou des boissons ainsi que le matériel nécessaire pour les servir (gobelets, carafes, bouteilles, canettes, ou autre).

Du côté des passagers, un meuble de siège peut comporter par exemple un espace de stockage ayant un ou plusieurs éléments parmi une pochette littérature, un porte-bouteille, ou un minibar. Le choix des rangements est configurable en fonction du souhait de la compagnie aérienne. Un meuble peut également comporter un logement intégrant un repose-pieds appelé aussi ottoman.

Les meubles ainsi que les modules de cuisine sont soumis à des tests de certification visant à contrôler leur comportement mécanique lors d'un choc. Le fabricant de module de cuisine et/ou de meuble doit donc justifier, auprès du fabricant d'avions, la compatibilité entre la conception du produit et les exigences de certification émises soit par des avionneurs, soit par des autorités de l'aviation civil.

Le meuble et le module de cuisine étant deux éléments distincts, ils doivent être séparés entre eux d'un espace dit "espace de déflexion" afin d'éviter un partage de charge entre eux lors de leur déformation engendrée par un choc. On s'assure ainsi que les cabines conservent leur intégrités structurelle et fonctionnelle en cas d'accident.

Des exemples de systèmes antérieurs sont décrits dans le document US2015367942 A1, qui décrit un avion comportant au moins un plancher dont l'axe longitudinal s'étend dans le sens de vol de l'avion, plusieurs sièges et une cuisine sur le plancher, ainsi que plusieurs chariots ou conteneurs pour les aliments, les boissons ou les ustensiles dans la cuisine. Un espace de réception dans la cuisine pour les chariots ou les conteneurs s'étend parallèlement à l'axe longitudinal et présente une dimension horizontale transversale à l'axe longitudinal qui varie. Le document US2007241232A1 décrit une disposition de sièges pour un véhicule transportant des passagers, en particulier un avion. La disposition prévoit une pluralité de positions assises comprenant un siège et un espace pour les pieds. Le repose-pieds d'une première position assise est situé à côté du siège d'une deuxième position assise, la deuxième position assise étant située généralement à l'avant de la première position assise. Chaque siège peut être incliné dans une position allongée dans laquelle un élément de soutien des jambes du siège fait saillie dans le repose-pieds associé. La première position assise et la deuxième position assise se chevauchent dans le sens transversal. Le document US2019291868A1 décrit un monument destiné à être utilisé dans la cabine d'un avion, qui comprend un ensemble monument et un ensemble siège. L'ensemble monument comprend un cadre comportant plusieurs parois définissant un compartiment. Les différentes parois comprennent une première paroi d'extrémité comportant une section avant au niveau d'un plan avant du cadre. Le compartiment est défini à l'arrière de la section avant. L'ensemble de siège est situé à l'avant du cadre. L'ensemble de siège comporte une coque configurée pour entourer au moins partiellement un siège passager. La coque comporte une partie arrière située à l'arrière du plan avant du cadre.

L'invention vise à proposer une configuration de meuble autorisant la suppression des espaces de déflexion afin d'optimiser l'intégration des sièges passagers à l'intérieur d'une cabine d'avion.

Plus précisément, l'invention a pour objet un meuble pour une cabine d'avion selon la revendication 1.

L'invention permet ainsi, en intégrant la partie dédiée au personnel de bord et la partie dédiée au passager dans un seul et même meuble de supprimer l'espace de déflexion existant entre deux meubles distincts classiques. L'invention réduit ainsi l'espace entre la face avant et la face arrière d'un meuble de siège d'avion tout en conservant le même volume de stockage et sans compromis de confort pour le passager. L'invention permet en outre de densifier l'implantation de sièges en autorisant dans certains cas l'installation d'une rangée de sièges supplémentaire à l'intérieur de la cabine d'avion.

La partie dédiée au personnel de bord comporte un module de cuisine contenant au moins un élément choisi parmi: un chariot, un demi-chariot, un réfrigérateur, ou un four.

Selon une réalisation de l'invention, la partie dédiée au personnel de bord comporte un espace de stockage contenant des équipements destinés à être utilisés par le personnel de bord.

Selon une réalisation de l'invention, la partie dédiée au personnel de bord comporte un centre de contrôle de systèmes multimédia.

La partie dédiée au passager comporte un logement dans lequel est disposé un repose-pieds.

Selon une réalisation de l'invention, la partie dédiée au passager comporte un espace de réception d'une tablette repas à l'état stocké.

Selon une réalisation de l'invention, la partie dédiée au passager comporte un siège passager.

Selon une réalisation de l'invention, la partie dédiée au passager comporte un espace de stockage pour un couffin de nourrisson.

Selon une réalisation de l'invention, la partie dédiée au passager porte un écran vidéo de système multimédia.

Selon une réalisation de l'invention, la partie dédiée au personnel de bord présente une hauteur supérieure à une hauteur de la partie dédiée au passager.

La partie dédiée au personnel de bord et la partie dédiée au passager présentent une paroi de séparation commune.

La paroi de séparation commune forme un angle non nul par rapport à l'axe longitudinal du meuble.

Selon une réalisation de l'invention, ledit meuble comporte en outre un deuxième module de meuble ayant une face avant et une face arrière, ladite face arrière du deuxième module de meuble étant accolée à la face avant du premier module de meuble sans espace de déflexion entre la face arrière du deuxième module de meuble et la face avant du premier module de meuble.

Selon une réalisation de l'invention, ledit meuble comporte en outre un troisième module de meuble ayant une face avant et une face arrière, ladite face arrière du troisième module de meuble étant accolée à la face avant du deuxième module de meuble sans espace de déflexion entre la face avant du deuxième module de meuble et la face arrière du troisième module de meuble.

L'invention a également pour objet une cabine d'avion comportant au moins une unité de siège et au moins un meuble tel que précédemment défini.

La présente invention sera mieux comprise et d'autres caractéristiques et avantages apparaîtront encore à la lecture de la description détaillée qui suit comprenant des modes de réalisation donnés à titre illustratif en référence avec les figures annexées, présentées à titre d'exemples non limitatifs, qui pourront servir à compléter la compréhension de la présente invention et l'exposé de sa réalisation et, le cas échéant, contribuer à sa définition, sur lesquelles:
[Fig. 1] La figure 1 est une vue partielle de dessus d'une cabine d'avion monocouloir comportant deux unités de sièges et deux meubles comportant chacun une partie dédiée au personnel de bord et une partie dédiée au passager;
[Fig. 2] La figure 2 est une représentation schématique de côté d'un ensemble formé par un meuble de cabine d'avion selon l'invention et une unité de siège associée;
[Fig. 3] La figure 3 est une vue de dessus d'une première variante de réalisation de meubles de cabine d'avion selon la présente invention;
[Fig. 4] La figure 4 est une vue de dessus d'une deuxième variante de réalisation de meubles de cabine d'avion selon la présente invention;
[Fig. 5] La figure 5 est une vue de dessus d'une troisième variante de réalisation de meubles de cabine d'avion selon la présente invention;
[Fig. 6] La figure 6 est une vue de dessus d'une quatrième variante de réalisation de meubles de cabine d'avion selon la présente invention;
[Fig. 7] La figure 7 est une vue de dessus d'une cinquième variante de réalisation de meubles de cabine d'avion selon la présente invention.

Il est à noter que les éléments structurels et/ou fonctionnels communs aux différents modes de réalisation présentent les mêmes références. Ainsi, sauf mention contraire, de tels éléments disposent de propriétés structurelles, dimensionnelles et matérielles identiques.

Par ailleurs, les termes relatifs de type "horizontal" ou "vertical", sont entendus par référence au sens commun que leur donnerait un passager assis sur un siège d'avion.

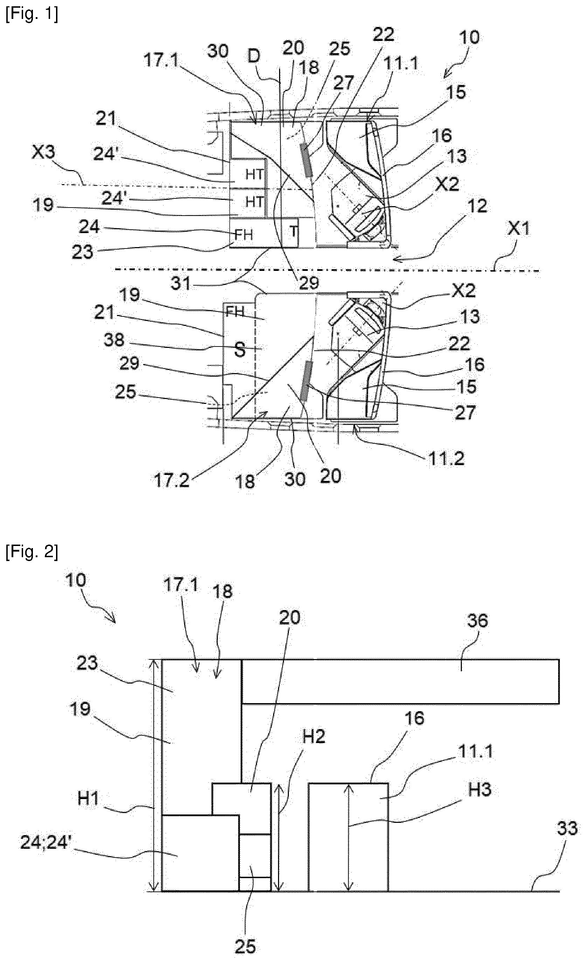

La figure 1 est une vue partielle d'une cabine d'avion 10 monocouloir d'axe longitudinal X1 comportant deux unités de siège 11.1, 11.2 séparées entre elle par un couloir de circulation 12. Chaque unité de siège 11.1, 11.2 comporte classiquement un siège 13 associé à une console latérale 15 munie notamment de rangements. Ces rangements, tels qu'une pochette littérature, un porte-bouteille, ou un minibar sont configurables en fonction du souhait de la compagnie aérienne. Une coque d'intimité 16 entoure au moins en partie un siège 13 correspondant de manière à délimiter un espace semi-clos autour du passager. Une telle configuration permet de garantir l'intimité du passager assis sur le siège 13.

Le siège 13 est avantageusement pourvu d'une cinématique lui permettant d'être mobile entre une position "assise" et une position "allongée". Dans la position assise utilisée notamment lors des phases d'arrêt, de décollage, et d'atterrissage de l'avion, le siège 13 est configuré pour définir une position assise d'un passager. Dans la position "allongée", le siège 13 est configuré pour définir une surface plane, avantageusement sensiblement horizontale. Des positions intermédiaires de confort peuvent également être proposées, telles que la position "relax" dans laquelle le dossier du siège 13 est fortement incliné.

Un siège 13 comporte un axe X2 défini par une intersection entre un plan horizontal et un plan médian vertical du siège 13. Ce plan médian peut correspondre globalement à un plan de symétrie du siège 13. L'axe X2 d'un siège 13 forme un angle non nul par rapport à l'axe longitudinal X1 de la cabine d'avion 10, par exemple de l'ordre de 45 degrés. En l'occurrence, les deux sièges 13 représentés sont tournés dans une direction opposée à l'axe longitudinal X1 de la cabine d'avion 10. Cela correspond à une configuration en chevron inversée dite "reverse herringbone" en anglais. En variante, dans une configuration en chevron classique dite "herringbone", les sièges 13 sont tournés en direction de l'axe longitudinal X1. En variante, les axes X2 des sièges 13 pourront s'étendre parallèlement à l'axe longitudinal X1 de la cabine d'avion 10.

Chaque unité de siège 11.1, 11.2 est disposée en regard d'un meuble 17.1, 17.2 correspondant. Un meuble 17.1, 17.2 comporte au moins un premier module de meuble 18 comprenant une première partie 19, dite "partie dédiée au personnel de bord", contenant un équipement destiné à être utilisé par un membre du personnel de bord et une deuxième partie 20, dite "partie dédiée au passager", comportant un élément spécifique à un siège 13 passager.

La partie 19 dédiée au personnel de bord et la partie 20 dédiée au passager s'étendent entre une face avant 21 et une face arrière 22 du premier module de meuble 18. La face avant 21 est tournée vers un espace réservé au personnel de bord. La face arrière 22 est tournée du côté opposé vers une unité de siège 11.1, 11.2. Le module de meuble 18 comporte également deux faces latérales 30, 31 disposées respectivement du côté d'une paroi de la cabine d'avion et du côté du couloir de circulation.

La partie 19 dédiée au personnel de bord et la partie 20 dédiée au passager se recouvrent longitudinalement l'une par rapport à l'autre suivant un axe longitudinal X3 dudit meuble 17.1. L'axe longitudinal X3 d'un meuble 17.1, 17.2 est parallèle à l'axe longitudinal X1 de la cabine d'avion 10. Du fait du recouvrement longitudinal entre les deux parties 19 et 20 d'un meuble 17.1, 17.2, il existe au moins une droite D perpendiculaire à l'axe longitudinal X3 du meuble 17.1, 17.2 qui coupe la première partie 19 ainsi que la deuxième partie 20 d'un meuble 17.1, 17.2.

Dans le mode de réalisation de la figure 1, la partie 19 du meuble 17.1 dédiée au personnel de bord comporte un module de cuisine 23 contenant au moins un élément choisi parmi: un chariot, un demi-chariot, un réfrigérateur, ou un four. Dans l'exemple représenté, la partie 19 dédiée au personnel de bord contient un chariot 24 et deux demi-chariots 24'. Bien entendu, le nombre et la capacité des chariots 24 intégrés dans un module de cuisine 23 pourront varier en fonction de la configuration du meuble 17.1 et de la capacité de l'avion.

Par ailleurs, la partie 20 dédiée au passager comporte un logement dans lequel est disposé un repose-pieds 25 (appelé aussi ottoman). Le logement est ouvert en direction de l'unité de siège 11.1, 11.2 correspondante. Lorsque le siège 13 est en position allongée, la surface plane définie par le siège 13 se situe au même niveau et de préférence dans le prolongement du repose-pieds 25 correspondant. La surface plane du siège 13 en position allongée et la surface interne du repose-pieds 25 définissent ainsi une surface de couchage pour le passager. Le repose-pieds 25 présente un axe parallèle ou confondu avec l'axe du siège 13 correspondant.

Un écran vidéo 27 d'un système multimédia dit système IFE (pour "Inflight Entertainment System" en anglais) pourra être disposé sur la face arrière de la partie 20 dédiée au passager.

La partie 19 dédiée au personnel de bord et la partie 20 dédiée au passager du premier module de meuble 18 présentent une paroi de séparation commune 29. La paroi de séparation commune 29 forme un angle non nul par rapport à l'axe longitudinal X3 du meuble 17.1. La partie 19 dédiée au personnel de bord et la partie 20 dédiée au passager présentent ainsi chacune une forme trapézoïdale.

La partie 19 dédiée au personnel de bord et la partie 20 dédiée au passager du premier module de meuble 18 présentent des ouvertures débouchant suivant deux directions différentes pour permettre respectivement l'accès à un élément du module de cuisine (chariot ou autre) par un membre du personnel de bord et l'accès au repose-pieds 25 par le passager.

Comme on peut le voir sur la figure 2, la partie 19 du meuble 17.1 dédiée au personnel de bord présente une hauteur H1 supérieure à une hauteur H2 de la partie 20 dédiée au passager. Les hauteurs H1, H2 sont mesurées par rapport à un plancher 33 de la cabine d'avion. En effet, le module de cuisine 23 pourra s'étendre suivant toute une hauteur H1 de la cabine d'avion 10 dans une configuration dite "full height" en anglais. Le module de cuisine 23 pourra alors comporter un ou plusieurs chariots 24 ou demi-chariots 24' en partie basse ainsi que des équipements de type four, réfrigérateur, machine à café, ou autre en partie haute.

La partie 20 dédiée au passager comportant le repose-pieds 25 présente une hauteur H2 inférieure à celle d'un porte-bagages 36 situé en partie haute de la cabine d'avion 10. Suivant une telle configuration, dite configuration "half eight" ou "underbin" en anglais. Cette hauteur H2 pourra correspondre à une hauteur H3 d'une coque 16 d'une unité de siège 11.1, 11.2.

En partie basse, le meuble 17.1 pourra être fixé sur des rails de fixation du plancher 33 de la cabine d'avion 10. La partie 19 constituant le module de cuisine 23 pourra être fixée à une paroi de la cabine d'avion dans sa portion supérieure au moyen d'attaches prévues à cet effet.

La partie 19 dédiée au personnel de bord du meuble 17.2 comporte un espace de stockage 38 pouvant contenir des équipements destinés à être utilisés par le personnel de bord, tels qu'une chaise roulante ou des rideaux pour la création d'un espace de repos.

En variante, la partie 19 dédiée au personnel de bord comporte un centre de contrôle de systèmes multimédia dit VCE pour "Video Crew Center" en anglais, qui permet de gérer le fonctionnement des systèmes multimédias associés aux sièges passagers 13 de la cabine d'avion 10. Le centre de contrôle pourra par exemple comporter un ordinateur installé sur un bureau associé à un siège.

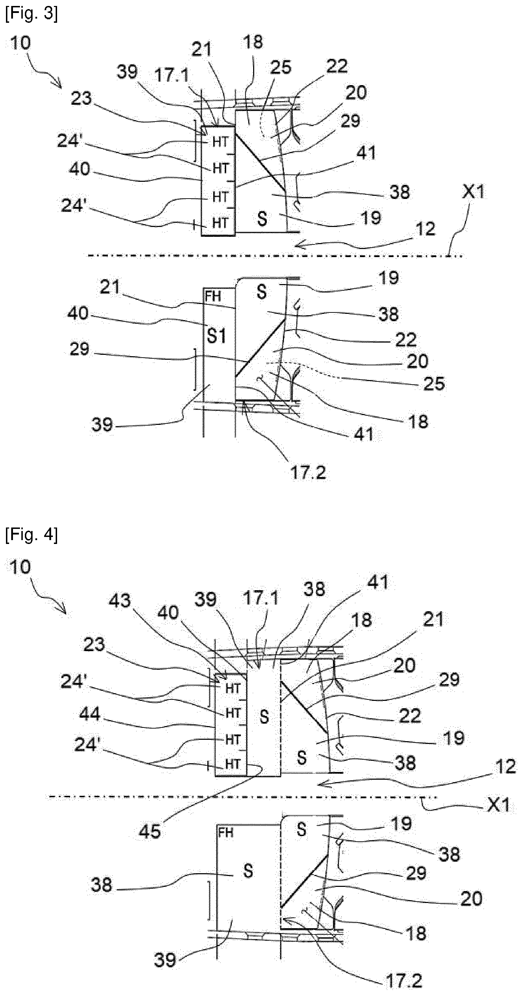

Dans le mode de réalisation de la figure 3, qui n'entre pas dans le champ des revendications, le meuble 17.1 comporte un premier module de meuble 18 muni d'une partie 20 dédiée au passager comportant un repose-pieds 25 et une partie 19 dédiée au personnel de bord comportant un espace de stockage 38.

Le meuble 17.1 comporte en outre un deuxième module de meuble 39 comprenant un module de cuisine 23. Le deuxième module de meuble 39 est rapporté par rapport au premier module de meuble 18. Le module de cuisine 23 comporte quatre demi-chariots 24' disposés les uns à côté des autres. Le nombre de demi-chariots 24' pourra bien entendu varier en fonction de la configuration de la cabine d'avion 10 et de la capacité de l'avion.

Le deuxième module de meuble 39 présente une face avant 40 et une face arrière 41. La face arrière 41 du deuxième module de meuble 39 est accolée à la face avant 21 du premier module de meuble 18 sans espace de déflexion entre la face arrière 41 du deuxième module de meuble 39 et la face avant 21 du premier module de meuble 18.

Le meuble 17.2 comporte un premier module de meuble 18 muni d'une partie 20 dédiée au passager comportant un repose-pieds 25 et une partie 19 dédiée au personnel de bord comportant un espace de stockage 38. Le meuble 17.2 comporte en outre un deuxième module de meuble 39 comportant un espace de stockage 38.

L'assemblage entre un premier module de meuble 18 et un deuxième module de meuble 39 d'un meuble correspondant 17.1, 17.2 pourra être réalisé via des moyens de fixation, de type vis, rivets, goujons, ou tout autre moyen de fixation adapté à l'application. Un meuble 17.1, 17.2 est réalisé en plusieurs modules, notamment deux modules de meuble ou plus, pour permettre le passage de chacun d'entre eux par la porte de la cabine d'avion 10.

Dans le mode de réalisation de la figure 4, qui n'entre pas dans le champ des revendications, le meuble 17.1 comporte un premier module de meuble 18 muni d'une partie 20 dédiée au passager comportant un repose-pieds 25 et une partie 19 dédiée au personnel de bord comportant un espace de stockage 38.

Le meuble 17.1 comporte en outre un deuxième module de meuble 39 comportant un espace de stockage 38 et un troisième module de meuble 43 constitué par un module de cuisine 23. Le troisième module de meuble 43 comporte quatre chariots 24 disposés les uns à côté des autres. Bien entendu, le nombre de chariots 24 pourra varier en fonction de la configuration de la cabine d'avion 10 et de la capacité de l'avion.

Le premier module de meuble 18, le deuxième module de meuble 39, et le troisième module de meuble 43 sont des modules distincts les uns par rapport aux autres. Les modules de meubles sont assemblés deux à deux par des moyens de fixation de type vis, rivets, goujons, ou tout autre moyen de fixation adapté à l'application.

Une face avant 21 du premier module de meuble 18 est accolée à une face arrière 41 du deuxième module de meuble 39 sans espace de déflexion entre la face arrière 41 du deuxième module de meuble 39 et la face avant 21 du premier module de meuble 18.

Par ailleurs, le troisième module de meuble 43 présentant une face avant 44 et une face arrière 45, la face avant 40 du deuxième module de meuble 39 est accolée à la face arrière 45 du troisième module de meuble 43 sans espace de déflexion entre la face arrière 45 du troisième module de meuble 43 et la face avant 40 du deuxième module de meuble 39.

Le meuble 17.2 comporte un premier module de meuble 18 muni d'une partie 20 dédiée au passager comportant un repose-pieds 25 et une partie 19 dédiée au personnel de bord comportant un espace de stockage 38. Le meuble 17.2 comporte en outre un deuxième module de meuble 39 comportant un espace de stockage 38.

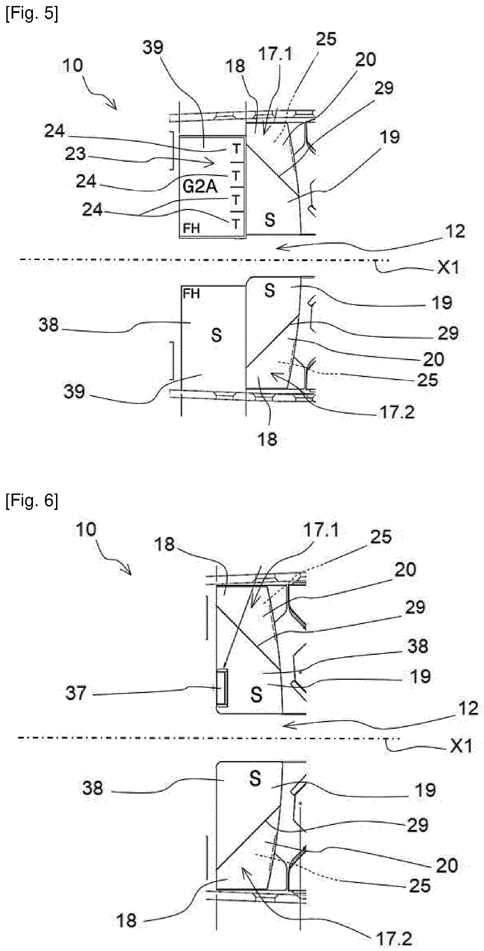

Dans le mode de réalisation de la figure 5, qui n'entre pas dans le champ des revendications, le meuble 17.1 comporte un premier module de meuble 18 muni d'une partie 20 dédiée au passager comportant un repose-pieds 25 et une partie 19 dédiée au personnel de bord comportant un espace de stockage 38.

Le meuble 17.1 comporte en outre un deuxième module de meuble 39 constitué par un module de cuisine 23. Le module de cuisine 23 comporte quatre chariots 24 disposés les uns à côté des autres. Autrement dit, la configuration du meuble 17.1 est analogue à celle du meuble 17.1 de la figure 3, sauf que les demi-chariots 24' ont été remplacés par des chariots 24.

Le meuble 17.2 comporte un premier module de meuble 18 muni d'une partie 20 dédiée au passager comportant un repose-pieds 25 et une partie 19 dédiée au personnel de bord comportant un espace de stockage 38. Le meuble 17.2 comporte en outre un deuxième module de meuble 39 comportant un espace de stockage 38.

Comme précédemment, les différents modules de chaque meuble 17.1, 17.2 sont accolés les uns aux autres sans espace de déflexion entre eux.

Dans le mode de réalisation de la figure 6, qui n'entre pas dans le champ des revendications, le meuble 17.1 comporte un premier module de meuble 18 muni d'une partie 20 dédiée au passager comportant un repose-pieds 25 ainsi qu'un siège passager 26, certifié ou non en phase d'atterrissage et de décollage.

Le premier module de meuble 18 comporte en outre une partie 19 dédiée au personnel de bord comportant un espace de stockage 38 ainsi qu'un siège 37 pour personnel de bord dit siège de type CAS pour "Cabin Attendant Seat".

Le meuble 17.2 comporte un premier module de meuble 18 muni d'une partie 20 dédiée au passager comportant un repose-pieds 25 et une partie 19 dédiée au personnel de bord comportant un espace de stockage 38.

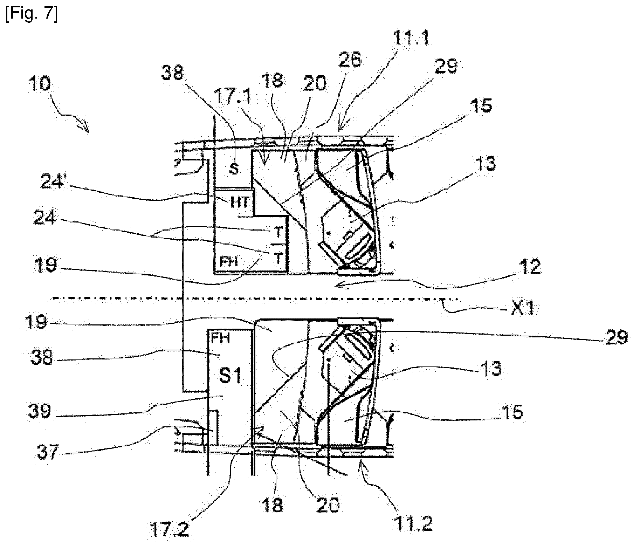

Dans le mode de réalisation de la figure 7, le meuble 17.1 comporte un premier module de meuble 18 muni d'une partie 20 dédiée au passager comportant un repose-pieds 25 ainsi qu'un siège passager 26 certifié ou non en phase d'atterrissage et de décollage.

Le premier module de meuble 18 comporte en outre une partie 19 dédiée au personnel de bord comportant un module de cuisine 23 comprenant deux chariots 24 et un demi-chariot 24' ainsi qu'un espace de stockage 38 latéral.

Le meuble 17.2 comporte un premier module de meuble 18 muni d'une partie 20 dédiée au passager comportant un repose-pieds 25 et une partie 19 dédiée au personnel de bord comportant un espace de stockage 38. Un deuxième module de meuble 39 comporte un espace de stockage 38 et un siège 37 pour personnel de bord.

Alternativement, la partie 20 dédiée au passager pourra comporter un espace de réception d'une tablette repas à l'état stocké et/ou un espace de stockage 38 pour un couffin de nourrisson, ou un minibar.

L'invention pourra être mise en œuvre avec des cabines d'avion autres que des cabines monocouloirs, notamment des cabines d'avion à deux couloirs de circulation 12 ou plus. En outre, le nombre de meubles 17.1, 17.2 installés à l'intérieur de la cabine d'avion 10 pourra être adapté en fonction de l'espace disponible et du besoin. Il n'est donc pas indispensable de prévoir systématiquement deux meubles 17.1, 17.2 comme dans les exemples représentés sur les figures pour un type de cabine particulier. On pourra ainsi réaliser des cabines d'avion comportant un seul ou plus de deux meubles 17.1, 17.2.

Bien entendu, les différentes caractéristiques, variantes et/ou formes de réalisation de la présente invention peuvent être associées les unes avec les autres selon diverses combinaisons dans la mesure où elles ne sont pas incompatibles ou exclusives les unes des autres.

En outre, l'invention n'est pas limitée aux modes de réalisation décrits précédemment et fournis uniquement à titre d'exemple. Elle englobe diverses modifications que pourra envisager l'homme du métier dans le cadre de la présente invention et notamment toutes combinaisons des différents modes de fonctionnement décrits précédemment, pouvant être pris séparément ou en association, tant qu'ils entrent dans le cadre des revendications annexées.

## Revendications

1. Meuble (17.1, 17.2) pour une cabine d'avion (10) comportant:
- au moins un premier module de meuble (18) comprenant:
- une face avant (21) et une face arrière (22),
- une première partie (19), dite "partie dédiée au personnel de bord", contenant un équipement destiné à être utilisé par un membre du personnel de bord, ladite partie (19) dédiée au personnel de bord comportant un module de cuisine (23) contenant au moins un élément choisi parmi: un chariot (24), un demi-chariot (24'), un réfrigérateur, ou un four, et
- une deuxième partie (20), dite "partie dédiée au passager", comportant un élément spécifique à un siège passager (13), ladite partie (20) dédiée au passager comportant un logement dans lequel est disposé un repose-pieds (25),
- ladite partie (19) dédiée au personnel de bord et ladite partie (20) dédiée au passager s'étendant entre la face avant (21) et la face arrière (22) dudit premier module de meuble (18),
- ladite partie (19) dédiée au personnel de bord et ladite partie (20) dédiée au passager se recouvrant longitudinalement l'une par rapport à l'autre suivant un axe longitudinal dudit meuble (17.1, 17.2),
- la partie (19) dédiée au personnel de bord et la partie (20) dédiée au passager étant intégrées dans un seul et même meuble,
**caractérisé en ce que** la partie (19) dédiée au personnel de bord et la partie (20) dédiée au passager (18) présentent une paroi de séparation commune (29), la paroi de séparation commune (29) formant un angle non nul par rapport à l'axe longitudinal (X3) du meuble (17.1, 17.2), de sorte que la partie (19) dédiée au personnel de bord et la partie (20) dédiée au passager présentent chacune une forme trapézoïdale.

2. Meuble selon la revendication 1, **caractérisé en ce que** la partie (19) dédiée au personnel de bord comporte un espace de stockage (38) contenant des équipements destinés à être utilisés par le personnel de bord.

3. Meuble selon la revendication 1 ou 2, **caractérisé en ce que** la partie (20) dédiée au passager comporte un siège passager (26).

4. Meuble selon l'une quelconque des revendications 1 à 3, **caractérisé en ce que** la partie (19) dédiée au personnel de bord présente une hauteur (H1) supérieure à une hauteur (H2) de la partie (20) dédiée au passager.

5. Meuble selon l'une quelconque des revendications 1 à 4, **caractérisé en ce qu'**il comporte en outre un deuxième module de meuble (39) ayant une face avant (40) et une face arrière (41), ladite face arrière (41) du deuxième module de meuble (39) étant accolée à la face avant (21) du premier module de meuble (18) sans espace de déflexion entre la face arrière (41) du deuxième module de meuble (39) et la face avant (21) du premier module de meuble (18).

6. Meuble selon la revendication 5, **caractérisé en ce qu'**il comporte en outre un troisième module de meuble (43) ayant une face avant (44) et une face arrière (45), ladite face arrière (45) du troisième module de meuble (43) étant accolée à la face avant (40) du deuxième module de meuble (39) sans espace de déflexion entre la face avant (40) du deuxième module de meuble (39) et la face arrière (45) du troisième module de meuble (43).

7. Cabine d'avion (10) comportant au moins une unité de siège (11.1, 11.2) et au moins un meuble (17.1, 17.2) tel que défini selon l'une quelconque des revendications précédentes.

## Patentansprüche

1. Schrank (17.1, 17.2) für eine Flugzeugkabine (10), mit:
- mindestens einem ersten Schrankmodul (18) mit:
- einer Vorderseite (21) und einer Rückseite (22),
- einem erstem Abschnitt (19), der als "Personalabschnitt" bezeichnet wird und Ausrüstung zur Verwendung durch ein Mitglied des Personals enthält, wobei der Personalabschnitt (19) ein Küchenmodul (23) mit mindestens einem Element, ausgewählt aus einem Servierwagen (24), einem halben Servierwagen (24'), einem Kühlschrank oder einem Ofen, umfasst, und
- einem zweiten Abschnitt (20), das als "Passagierabschnitt" bezeichnet wird und ein für einen Passagiersitz (13) spezifisches Element umfasst, wobei das Passagierabschnitt (20) eine Aufnahme, in dem eine Fußstütze (25) angeordnet ist, umfasst,
- wobei der Personalabschnitt (19) und der Passagierabschnitt (20) sich zwischen der Vorderseite (21) und der Rückseite (22) des ersten Schrankmoduls (18) erstreckt,
- wobei der Personalabschnitt (19) und der Passagierabschnitt (20) sich entlang einer Längsachse des Kabinenabschnitts (17.1, 17.2) längs überlappen,
- wobei der Personalabschnitt (19) und der Passagierabschnitt (20) in einem einzigen Schrank integriert sind,
**dadurch gekennzeichnet, dass** der Personalabschnitt (19) und der Passagierabschnitt (20) für den Passagier (18) eine gemeinsame Trennwand (29) aufweisen, wobei die gemeinsame Trennwand (29) einen Winkel ungleich Null mit der Längsachse (X3) der Kabine (17.1, 17.2) bildet, sodass der Personalabschnitt (19) und der Passagierabschnitt (20) jeweils eine trapezförmige Gestalt aufweisen.

2. Schrank nach Anspruch 1, **dadurch gekennzeichnet, dass** der Personalabschnitt (19) einen Stauraum (38), der Ausrüstung enthält, die vom Personal verwendet werden soll, umfasst.

3. Schrank nach Anspruch 1 oder 2, **dadurch gekennzeichnet, dass** der Passagierabschnitt (20) einen Passagiersitz (26) umfasst.

4. Schrank nach einem der Ansprüche 1 bis 3, **dadurch gekennzeichnet, dass** der Personalabschnitt (19) eine Höhe (H1), die größer als die Höhe (H2) des Passagierabschnitts (20) ist, aufweist.

5. Schrank nach einem der Ansprüche 1 bis 4, **dadurch gekennzeichnet, dass** er ferner ein zweites Schrankmodul (39) mit einer Vorderseite (40) und einer Rückseite (41) umfasst, wobei die Rückseite (41) des zweiten Schrankmoduls (39) ohne Ablenkungsraum zwischen der Rückseite (41) des zweites Schrankmodul (39) und der Vorderseite (21) des erstes Schrankmoduls (21) an der Vorderseite (21) des ersten Schrankmoduls (18) gestellt ist.

6. Schrank nach Anspruch 5, **dadurch gekennzeichnet, dass** er ferner ein drittes Schrankmodul (43) mit einer Vorderseite (44) und einer Rückseite (45) umfasst, wobei die Rückseite (45) des dritten Schrankmoduls (43) ohne Ablenkungsraum zwischen der Vorderseite (40) des zweites Schrankmodul (39) und der Rückseite (45) des dritten Schrankmoduls (43) an der Vorderseite (40) des zweiten Schrankmoduls (39) gestellt ist.

7. Flugzeugkabine (10) mit mindestens einer Sitzeinheit (11.1, 11.2) und mindestens einem Schrank (17.1, 17.2) nach einem der vorhergehenden Ansprüche.

## Claims

1. A cabinet (17.1, 17.2) for an aircraft cabin (10), comprising:
- at least one first cabinet module (18) comprising:
- a front face (21) and a rear face (22),
- a first part (19), referred to as the "staff part", containing equipment to be used by a member of the staff, said staff part (19) comprising a galley module (23) containing at least one element selected from: a trolley (24), a half-trolley (24'), a refrigerator, or an oven, and
- a second part (20), referred to as the "passenger part", comprising an element specific to a passenger seat (13), said passenger part (20) comprising a housing in which a footrest (25) is arranged,
- said staff part (19) and said passenger part (20) extending between the front face (21) and the rear face (22) of said first cabinet module (18),
- said staff part (19) and said passenger part (20) longitudinally overlapping along a longitudinal axis of said cabinet (17.1, 17.2),
- the staff part (19) and the passenger part (20) being integrated into one single cabinet,
**characterized in that** the staff part (19) and the passenger part (20) for the passenger (18) have a common partition wall (29), the common partition wall (29) forming a non-zero angle with respect to the longitudinal axis (X3) of the cabinet (17.1, 17.2), so that the staff part (19) and the passenger part (20) each have a trapezoidal shape.

2. The cabinet according to claim 1, **characterized in that** the staff part (19) comprises a storage space (38) containing equipment to be used by the staff.

3. The cabinet according to claim 1 or 2, **characterized in that** the passenger part (20) includes a passenger seat (26).

4. The cabinet according to any one of the claims 1 to 3, **characterized in that** the staff part (19) has a height (H1) greater than a height (H2) of the passenger part (20).

5. The cabinet according to any one of the claims 1 to 4, **characterized in that** it further comprises a second cabinet module (39) having a front face (40) and a rear face (41), said rear face (41) of the second cabinet module (39) being attached to the front face (21) of the first cabinet module (18) without any deflection gap between the rear face (41) of the second cabinet module (39) and the front face (21) of the first cabinet module (18).

6. The cabinet according to claim 5, **characterized in that** it further comprises a third cabinet module (43) having a front face (44) and a rear face (45), said rear face (45) of the third cabinet module (43) being attached to the front face (40) of the second cabinet module (39) without any deflection gap between the front face (40) of the second cabinet module (39) and the rear face (45) of the third cabinet module (43).

7. An aircraft cabin (10) comprising at least one seat unit (11.1, 11.2) and at least one cabinet (17.1, 17.2) as defined according to any one of the preceding claims.
